# EUROPEAN PATENT SPECIFICATION

(11) **EP 1 062 872 B1**
(45) Date of publication and mention of the grant of the patent: **18.07.2007**
(21) Application number: 99830394.5
(22) Date of filing: 24.06.1999
(51) Int. Cl.: A21D 13/08, A23G 3/00

(54) **Dough product containing two garnished faces**
Teigware, bei welcher zwei Seiten verziert wurden
Pâte alimentaire contenant deux cotés décorés

(43) Date of publication of application: 27.12.2000
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Giachino, Giuseppe, 12040 Sommariva Perno (Cuneo) (IT)
(74) Representative: Rambelli, Paolo

(56) References cited:
- DE-A- 3 611 650
- GB-A- 723 635
- GB-A- 2 335 133
- SPOOKY SNACKS, [Online] - 9 December 1999 (1999-12-09) XP002125175 Retrieved from the Internet: <URL:http://fly.hiwaay.net/ ~asbacon/haloween/hallosnacks.html> [retrieved on 1999-12-10]

## Description

The present invention relates to a food product in accordance with the preamble of Claim 1 hereunder. Food products of this type are common in the confectionery industry: to give an example, reference can be made to the food product sold for many years under the commercial name "Brioss" by companies of the Ferrero Group.

DE 36 11 650 A describes a product comprising bread slices, wherein one bread slice is formed from a base enclosed by a surrounding rim; the trough-like cavity thus formed is at least partially fillable with introduced filling and is coverable with a further bread slice.

GB 723 635 A describes a thick form of clap-bread, i.e. hard, crisped and light bread from unleavened dough comprising thin, superposed, individually baked layers of such bread interconnected by an edible thermoplastic substance. A pile of layers of square or rectangular shape may be coated on two opposite sides or on all four sides with the thermoplastic substance in liquid form.

The present invention is defined by the claims sets out to furnish a food product of type specified above that will be improved from both an organolectic point of view and in relation to an aspect characteristic of food products obtained by means of baking a leavened dough in an oven, that is to say, the possible presence in an external and exposed position of parts that have the on the whole porous or cavernous structure typical of leavened dough after baking. Inasmuch as it is exposed on the outside of the product, such a porous structure is intrinsically subject to humidity absorption phenomena.

According to the present invention, this scope is attained thanks to a product having the characteristics set out in the claims attached hereto.

The invention concerns also the fabrication process for such a product.

The invention will now be described, though purely by way of example, by reference to the attached drawings, where:
- Figures 1, 2 and 3 illustrate, in an ideal sequence, the successive realization phases of a product in accordance with the invention; and
- Figure 4 represents a product in accordance with what at the moment is the preferred embodiment of the invention.

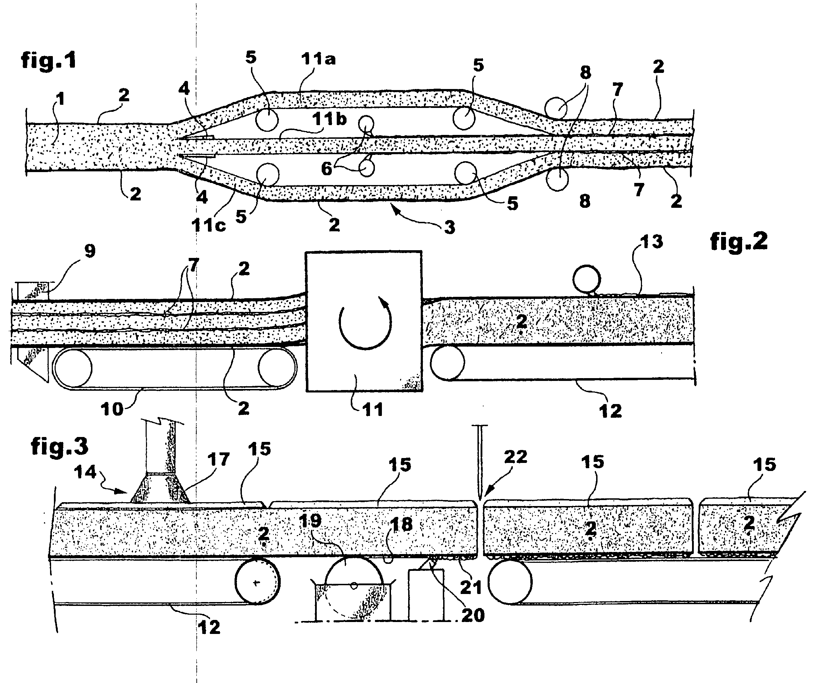

The evolution of the phases represented in Figures 1, 2 and 3 is to be understood as organized from left to right and following the order of the numbering of the various figures.

The reference number 1 in the left-hand part of Figure 1 thus indicates a strip or web of leavened bread obtained from a mass of leavened dough subjected to rolling and baking in continuous film. The criteria underlying the realization of such a strip or web of leavened bread (which in the most common embodiments has a thickness of the order of two centimetres) are to be deemed as wholly known to the state of the art and therefore such as not to call for any detailed description for present purposes.

A characteristic feature of the bread strip or web is the presence of two skins or soft crusts 2 having an on the whole compact structure on the two principal and opposite faces of the strip or web 1. The skins 2 in question derive from the operation of baking the bread and are in contrast (also on account of their colour, which is usually more brownish) with the porous or cavernous structure of the body of the strip or web 1.

Proceeding from left to right, i.e. in the direction of motion of the strip or web 1, the reference number 3 indicates a cutting and stuffing station-where the bread strip or web 1 is subdivided longitudinally and over its entire width to form a plurality of sheets 11a, 11b, 11c.

The said cutting operation is performed by means of knives or blades 4; the specific embodiment example here illustrated makes use of two blades or knives 4 and therefore divides the bread strip or web 1 into three sheets. This, of course, is just one embodiment example, since the strip or web 1 can be subdivided into any desired number of sheets, which may also be of different thicknesses.

It will also be appreciated that the two outermost sheets deriving from the cutting operation (i.e. the sheets 11a and 11c in the example here illustrated) still present the skins 2 on their outer faces. The inner sheets resulting from this subdivision, i.e. the sheet 11b of the example here considered, are characterized by the porous structure throughout their thickness.

The reference numbers 5 indicate the whole of guide formations (which are here represented in the form of rollers or wheels, but could also be constituted by blades, motorized belts or similar guide structures) intended to make the sheets 11a, 11b and 11c to move forward across the station 3 so as to be able to receive (through a spreading operation with respective material supply heads 6) layers of stuffing 7. These layers are intended to become interposed between the sheets 11a, 11b, 11c, which will subsequently be brought again into contact with each other, creating a condition of adhesive coupling, by means of further guide elements such as the rollers 8.

The criteria and the modalities of such a cutting and stuffing operation are likewise to be considered as well known to the state of the art and therefor need not here be described in further detail.

In this connection it should be noted that the supply heads 6 have here been represented in the form of a pair of individual stations, each of which is intended to apply a respective layer of stuffing 7 to each of the opposite faces of the sheet 11b situated in a central position between them.

The supply stations 6 may either be equal or different from each other. The same applies also for the stuffing substances (typically creams having the taste of milk, chocolate, etc.) and/or the characteristics (thickness, etc.) of the stuffing layers 7 constituted by these substances.

The stations 6 have here been represented as single entities. In actual practice, however, each station 6 may consist of several units arranged in cascade and capable of applying a succession of different substances on the sheet of bread that is being lined. In an embodiment preferred at this moment, each of the stations 6 actually consists of a first unit intended to provide an initial wetting with fat in a molten state of the layer of bread that is to be stuffed and a second unit that applies a layer of cream.

For simplicity of illustration, again, it has here been supposed that the two layers of stuffing 7 are applied directly onto the two opposite faces of sheet 11b, i.e. the sheet in the central position.

This is only one of the numerous realization solutions that make it possible to obtain the identical final result. For example, the stuffing masses 7 and/or possible other layers (of edible fat, for example) associated with them may be spread not only on one sheet but on both the sheets between which the stuffing mass is intended to be situated. Referring to the embodiment example illustrated by Figure 1, for example, one can provide for the presence of additional units 6 to distribute the stuffing mass only or also on the sides of sheets 11a and/or 11b that face the sheet 11b.

Once again there should be borne in mind the fact that, while the example here illustrated divides the bread strip or web 1 into three sheets, the said strip or web 1 can be subdivided into any desired number of sheets.

In any case, the final result of the described operations corresponds to the fact that the stuffing layers 7 (please refer to the part at the extreme right of Figure 1), no matter how they may have been formed and no matter what their number, will be substantially parallel to the outer skins 2.

Passing on to the subsequent phases of the process represented by Figure 2, the reference number 9 illustrates a cutting station (of a known type and here represented schematically in the form of a blade that extends vertically, even though the station will preferably consist of a series of vertical blades placed side by side) and has the task of dividing the bread strip or web 1 into longitudinal strips having a thickness of the order of some centimetres.

For instance (the dimensions of the data reported herein are of exemplary character), in the case of a bread strip or web 1 having a thickness of the order of 3 cm, these strips can have a width of some 2-3 cm.

The strips formed by the action of the blade or blades 9 therefore present the section of a parallelogram delimited by two pairs of opposite faces. The faces of one of these pairs will therefore be completely covered by the baking skins 2. The strips in question move forward (on a belt conveyor 10, for example) in the direction of a rotator station 11. At the station 11 (once again of a known type, possibly of the plough-share type) the bread strips are subjected to a motion that will rotate them about their principal longitudinal axis. This movement has an angular amplitude of 90°, so that the strips, on continuing their forward motion after the rotation (on, say, another belt conveyor 12 situated downstream of the station 11), will have their skins 2 no longer oriented in a horizontal direction, as was the case upstream of the station, but rather in a vertical direction. The defining skins 2 therefore no longer find themselves in, respectively, an upper and a lower position, but rather in lateral positions, while the other two faces (which have a porous surface) have passed from lateral positions to, respectively, an upper and a lower position.

At this point an appropriate unit is used to cover the porous face of the strip that finds itself in the upper position with an edible gluing layer 13, which may consists, for example, of mou (this being the name given to an edible mass consisting basically of caramel and condensed milk).

Subsequently, at an application station indicated by 14, this mou layer 13 is covered with plaques or tiles 15 consisting preferably of a so-called meringue crust. It should here be recalled the term meringue is generally understood as referring to an on the whole solid and friable edible mass obtained consolidating by heating an egg-white batter: a typical formulation of such a batter would provide for the presence of sugar (20-25%), flour of type 00, almonds or nuts, and fats (2-12%).

Preferably the aforesaid plaques or tiles 15 are realized separately (in accordance with well known criteria) and in such a way that their width is equal to the width of the strips formed at the cutting station 9 and their length equal to the length that, by means of a final transverse cutting operation, it is desired to confer upon the individual products obtained from each strip.

The fact that the plaques or tiles 15 are separately formed to in such a way as to have the exact dimensions that enable them to be applied directly to -the strip they are intended to garnish makes it possible to avoid the meringue material of which they are made having to be subjected to a cutting operation (in both the longitudinal direction and the transverse direction) that would inevitably lead to a fragmentation of the material of which they are made, which is intrinsically friable.

The aforesaid plaques 15 can be readily taken from their formation station (not shown on the drawings) to be deposited on the mou layer 12 without being damaged by having recourse to handling units that are currently employed in confectionery industry. The units in question, for example, may be of the vacuum-operated type with gripping heads that are essentially similar to suction cups. One of these heads has been schematically illustrated in the left-hand part of Figure 3, where it is identified by the reference number 17. As has been made perfectly clear, however, these are handling units that are today widely used in confectionery industry: for a description of possible realization solutions, please consult patent specifications EP-A-0 239 547 and EP-A-0 768 254.

It should be noted, however, that the solution of realizing the layer 15 in the form of preformed plaques or tiles, though preferred, is not imperative.

Following the application of the layer 15 (but the operation about to be described could also be performed either before or during the application of this layer), the opposite face of the strip, which is likewise porous, has applied to it a further garnishing that may consist, for example, of a layer of cocoa or chocolate cream 18 applied, for example, by means of a roller or brush applicator 19 that obtains its supply from a bath or tub of the material to be applied (but here, once again, we are concerned with a solution well known to the state of the art). Thereafter, the cocoa cream layer 18 is covered with grained material 21, using for this purpose an application unit 20 that could be, for example, of the blower type. The grained material 21 may consist, for example, of meringue grains, especially meringue grains having the taste of carrots.

It is in any case quite evident that, even though the illustrated solution is the one preferred at this moment, nothing prevents, at least in general principle, an inversion of the garnishing masses, i.e. arranging for the plaques 15 to be applied to the lower face and the grained foundation 18, 21 on the upper face.

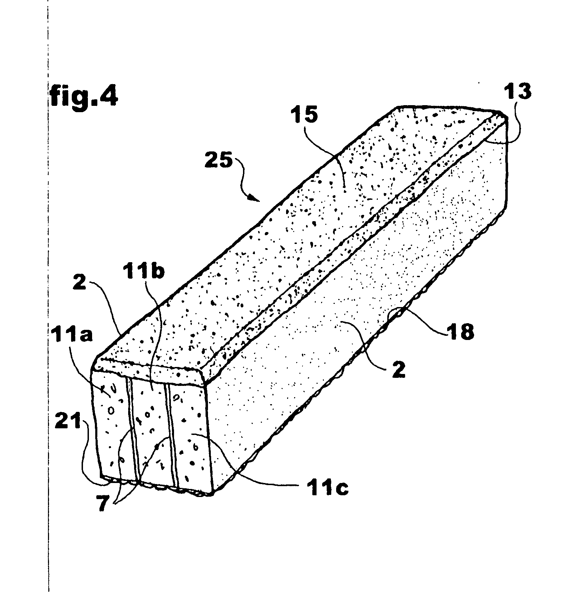

The reference number 22 indicates a cutting station that divides the continuous strip of filled and garnished bread into individual pieces that constitute the final product, which is illustrated by Figure 4 and there indicated by the reference number 25. In the case in which the layer 15 is realized in the form of plaques or tiles, the aforesaid cutting operation is performed in the region that separates two successive plaques 15.

In any case, the final product is substantially a bar that may have a length of, say, 12 cm (this figure, which is purely indicative, is well adapted to the previously mentioned figures of width and thickness) and, in the embodiment at present preferred, the following structure:
- a core of baked dough having a section in the form of a parallelogramme and consisting of a series of sheets 11a, 11b, 11c separated by strips of filling 7; naturally, the sheets can differ from each other in both thickness and structure, just as the strips of filling 7 may differ from each other;
- a first pair of opposite faces, parallel to the filling layers 7, completely covered by the skins 2 with which the bread strip or web 1 is provided as a result of the baking; and
- a second pair of opposite faces completely lined with garnishing masses; in particular, a first face (the upper face when observed from the point of view of Figure 4) is completely covered by a layer of meringued crust 15 anchored to the body of the product by a mou layer 13, while the opposite face is completely covered by an undercoat foundation of cocoa cream 18 associated with a meringue grain 21.

Observing the product illustrated-in Figure 4, it will be appreciated that the exposure to the outside of the spongy or cavernous structure of the bread strip or web 1 is to all intents and purposes limited to the two end faces, while all the other faces are lined/protected either by the two skins 2 or by the garnishing masses constituted by the plaques 15 anchored to the layer 13 and the grained lining 18, 21. Of course, subsequent processing operations that have not here been illustrated would make it possible to cover also the aforesaid end faces and thus providing complete protection of the external surface of the spongy/cavernous structure of the baked bread.

## Claims

1. A food product comprising a bar shaped body of leavened baked dough with a spongy structure having a section in the form of parallelogram delimited by two pairs of opposite faces, in which the opposite faces of one of the said pairs are completely covered by respective externally exposed baking skins (2), wherein the said body presents at least one stuffing layer (7) that extends parallel to the said baking skins (2), **characterised in that** the faces of the other of the said pairs have a porous surface completely lined by garnishing masses (13, 15, 18, 21).

2. A product in accordance with claim 1, **characterised in that** the said body comprises a plurality of said stuffing layers (7) parallel to each other.

3. A product in accordance with any one of the preceding claims, **characterised in that** the said garnishing masses comprise a meringue-base crust (15).

4. A product in accordance with any one of the preceding claims, **characterised in that** the said garnishing masses comprise a foundation layer of food material (18) containing grained material (21).

5. A food product in accordance with claims 3 and 4, **characterised in that**, of the said faces of said other pair, the one carries associated with it the said meringue-base crust (15), while the other carries associated with it the said foundation (18) containing grained material (21).

6. A product in accordance with claim 3 or claim 5, **characterised in that** the said meringue-base crust (15) is applied to the said body with a food adhesive (13).

7. A product in accordance with claim 6, **characterised in that** the said food adhesive (13) is mou-based.

8. A product in accordance with claim 4 or claim 5, **characterised in that** the said grained material is meringue grain.

9. A product in accordance with any one of claims 4, 5 or 8, **characterised in that** the said food-material foundation (18) has a cocoa cream base.

10. A food product in accordance with any one of the preceding claims, **characterised in that** it is constituted by a bar of elongated shape with its two end faces substantially devoid of covering material, so that the spongy structure of the baked dough appears on the outside of the product at the said end faces.

11. A product in accordance with any one of claims 1 to 9, **characterised in that** it is constituted by a bar of elongated shape with two end faces provided with respective covering materials, so that the spongy structure of the baked dough is completely hidden from outside the product.

12. A process for realizing a product in accordance with any one of claims 1 to 9, **characterised in that** it comprises the steps of:
- producing a strip of baked dough having a parallelogram as section and delimited by two pairs of opposed faces with the opposed faces of one of the said pairs provided with respective baking skins (2) situated in respectively the upper and the lower position with respect to the strip, while the faces of the other of the said pairs are to be found on the lateral positions,
- rotating (11) said strip round its longitudinal axis and thus bringing the said baking skins (2) into the lateral positions, while the faces of the other of the said two pairs come to be situated respectively in the upper and the lower position, and
- applying said garnishing masses (13, 15, 19, 20) to the said faces of the other of the said two pairs situated in the upper and the lower position.

13. A process in accordance with claim 12, **characterised in that** it comprises the operation of realizing a strip or web of baked bread (1) provided with baking skins (2) on two opposite faces and also the operation of subdividing the said strip or web into a plurality of said strips.

14. A process in accordance with claim 12 or claim 13, **characterised in that** the said strip is subjected to a transverse cutting operation (22) that subdivides it into a plurality of pieces, each destined to define a respective product, and by the fact that at least one of the said garnishing masses is realized in the form of plaques (15) having a length corresponding to the length of the said pieces, so that the said plaques will not be affected by the said transverse cutting operation (22).

15. A process in accordance with claim 14, **characterised in that** it comprises the operations of realizing the said plaques (15) from a meringue mass as the starting material.

## Patentansprüche

1. Lebensmittelprodukt mit einem riegelförmigen Körper aus gesäuertem gebackenem Teig mit einer Biskuitteig-artigen ("spongy") Struktur, die einen Querschnitt in Form eines Parallelogramms besitzt, das von zwei Paaren gegenüberliegender Flächen begrenzt ist, wobei die gegenüberliegenden Flächen eines der Paare vollständig von jeweiligen nach außen exponierten Backhäuten (2) bedeckt sind, wobei der Körper mindestens eine Füllungsschicht (7) aufweist, die sich parallel zu den Backhäuten (2) erstreckt, **dadurch gekennzeichnet, dass** die Flächen des anderen der Paare eine poröse Oberfläche besitzen, die vollständig mit Garniermassen (13, 15, 18, 21) belegt ist.

2. Produkt nach Anspruch 1, **dadurch gekennzeichnet, dass** der Körper eine Vielzahl von zueinander parallelen Füllungsschichten (7) besitzt.

3. Produkt nach einem der vorangehenden Ansprüche, **dadurch gekennzeichnet, dass** die Garniermassen eine Schaumgebäck ("meringue") basierte Kruste (15) umfassen.

4. Produkt nach einem der vorangehenden Ansprüche, **dadurch gekennzeichnet, dass** die Garniermassen eine Grundschicht aus Lebensmittelmaterial (18) umfassen, die körniges Material (21) umfasst.

5. Lebensmittelprodukt nach Anspruch 3 und 4, **dadurch gekennzeichnet, dass** von den Flächen des anderen Paars die eine eine mit ihr verbundene Schaumgebäck ("meringue") basierte Kruste (15) trägt, während die andere eine mit ihr verbunden Grundschicht (18) trägt, die das körnige Material (21) enthält.

6. Produkt nach Anspruch 3 oder 5, **dadurch gekennzeichnet, dass** die Schaumgebäck ("meringue") basierte Kruste (15) mit einem Lebensmittelkleber (13) auf den Körper aufgebracht wird.

7. Produkt nach Anspruch 6, **dadurch gekennzeichnet, dass** der Lebensmittelkleber (13) Mou-basiert ist.

8. Produkt nach Anspruch 4 oder 5, **dadurch gekennzeichnet, dass** das körnige Material Schaumgebäck ("meringue")-Körner sind.

9. Produkt nach einem der Ansprüche 4, 5 oder 8, **dadurch gekennzeichnet, dass** die Lebensmittelmaterial-Grundschicht (18) eine Kakaocremebasis besitzt.

10. Lebensmittelprodukt nach einem der vorangehenden Ansprüche, **dadurch gekennzeichnet, dass** es von einem Riegel länglicher Form dargestellt ist, wobei dessen beide Endflächen im Wesentlichen frei von bedeckendem Material sind, sodass die Biskuitteig-artige ("spongy") Struktur des gebackenen Teigs auf der Außenseite des Produkts an den Endflächen erscheint.

11. Produkt nach einem der Ansprüche 1 bis 9, **dadurch gekennzeichnet, dass** es aus einem Riegel länglicher Form besteht, wobei die beiden Endflächen mit jeweiligen bedeckenden Materialien versehen sind, sodass die Biskuitteig-artige ("spongy") Struktur des gebackenen Teigs vollständig vom äußeren des Produkts aus gesehen versteckt ist.

12. Verfahren zur Realisierung eines Produkts nach einem der Ansprüche 1 bis 9, **dadurch gekennzeichnet, dass** es die folgenden Schritte umfasst:
- Herstellen eines Streifens gebackenen Teigs mit einem Parallelogrammquerschnitt und begrenzt von zwei Paaren gegenüberliegenden Flächen, wobei die gegenüberliegenden Flächen eines der Paare mit jeweiligen Backhäuten (2) versehen sind, die jeweils in der oberen und der unteren Position in Bezug auf den Streifen platziert sind, während die Flächen des anderen der beiden Paare auf den seitlichen Positionen zu finden sind,
- Drehen (11) des Streifens um seine Längsachse und somit Bringen der Backhäute (2) in die seitlichen Positionen, während die Flächen des anderen der beiden Paare jeweils in der oberen und der unteren Position zu liegen kommen, und
- Aufbringen der Garniermassen (13, 15, 19, 20) auf die Flächen des anderen der beiden Paare, das in der oberen und unteren Position liegt.

13. Verfahren nach Anspruch 12, **dadurch gekennzeichnet, dass** es den Vorgang des Realisierens eines Streifens oder einer Bahn aus gebackenem Brot (1) umfasst, das mit Backhäuten (2) auf zwei gegenüberliegenden Flächen versehen ist, und auch den Vorgang des Unterteilens des Streifens oder der Bahn in eine Vielzahl von Streifen umfasst.

14. Verfahren nach Anspruch 12 oder Anspruch 13, **dadurch gekennzeichnet, dass** der Streifen einem Querschneidevorgang (22) unterzogen wird, der ihn in eine Vielzahl von Stücken unterteilt, wobei jedes dazu bestimmt ist, ein jeweiliges Produkt zu bilden, und durch die Tatsache, dass mindestens eine der Garniermassen in Form von Tafeln (15) mit einer Länge, die der Länge der Stücke entspricht, realisiert wird, sodass die Tafeln nicht von dem Querschneidevorgang (22) betroffen werden.

15. Verfahren nach Anspruch 14, **dadurch gekennzeichnet, dass** es die Vorgänge des Realisierens der Tafeln (15) aus einer Schaumgebäck ("meringue") -masse als Ausgangsmaterial umfasst.

## Revendications

1. Produit alimentaire comprenant un corps en forme de barre de pâte levée cuite au four, à structure spongieuse, ayant une section en forme de parallélogramme délimitée par deux paires de faces opposées, les faces opposées de l'une desdites paires étant complètement recouvertes par des peaux de cuisson respectives exposées extérieurement (2), ledit corps présentant au moins une couche de fourrage (7) qui s'étend parallèlement auxdites peaux de cuisson (2), **caractérisé en ce que** les faces de l'autre desdites paires ont une surface poreuse complètement tapissée de masses de garniture (13, 15, 18, 21).

2. Produit selon la revendication 1, **caractérisé en ce que** ledit corps comprend une pluralité desdites couches de fourrage (7) parallèles les unes aux autres.

3. Produit selon l'une quelconque des revendications précédentes, **caractérisé en ce que** lesdites masses de garniture comprennent une croûte à base de meringue (15).

4. Produit selon l'une quelconque des revendications précédentes, **caractérisé en ce que** lesdites masses de garniture comprennent une couche de fondation de matière alimentaire (18) contenant une matière granuleuse (21).

5. Produit alimentaire selon les revendications 3 et 4, **caractérisé en ce que**, desdites faces de ladite autre paire, une face porte, associée à elle, ladite croûte à base de meringue (15), tandis que l'autre porte, associée à elle, ladite fondation (18) contenant la matière granuleuse (21).

6. Produit selon la revendication 3 ou la revendication 5, **caractérisé en ce que** ladite croûte à base de meringue (15) est appliquée sur ledit corps au moyen d'un adhésif à usage alimentaire (13).

7. Produit selon la revendication 6, **caractérisé en ce que** ledit adhésif à usage alimentaire (13) est à base de *"mou".*

8. Produit selon la revendication 4 ou la revendication 5, **caractérisé en ce que** ladite matière granuleuse consiste en grains de meringue.

9. Produit selon l'une quelconque des revendications 4, 5 ou 8, **caractérisé en ce que** ladite fondation de matière alimentaire (18) a une base de crème de cacao.

10. Produit alimentaire selon l'une quelconque des revendications précédentes, **caractérisé en ce qu'**il est constitué par une barre de forme allongée ayant ses deux faces d'extrémité sensiblement dépourvues de matière de couverture, de manière que la structure spongieuse de la pâte cuite au four apparaisse sur l'extérieur du produit au niveau desdites faces d'extrémité.

11. Produit selon l'une quelconque des revendications 1 à 9, **caractérisé en ce qu'**il est constitué par une barre de forme allongée ayant deux faces d'extrémité pourvues de matières de couverture respectives, de manière que la structure spongieuse de la pâte cuite au four soit complètement dissimulée depuis l'extérieur du produit.

12. Procédé pour réaliser un produit selon l'une quelconque des revendications 1 à 9, **caractérisé en ce qu'**il comprend les étapes consistant à :
- produire une bande de pâte cuite au four ayant un parallélogramme comme section et délimitée par deux paires de faces opposées, les faces opposées de l'une desdites paires étant pourvues de peaux de cuisson respectives (2) situées, respectivement, dans la position supérieure et la position inférieure par rapport à la bande, tandis que les faces de l'autre desdites paires se trouvent en les positions latérales,
- faire tourner (11) ladite bande autour de son axe longitudinal et donc amener lesdites peaux de cuisson (2) jusque dans les positions latérales, tandis que les faces de l'autre desdites deux paires viennent à être situées, respectivement, dans la position supérieure et la position inférieure, et
- appliquer lesdites masses de garniture (13, 15, 19, 20) sur lesdites faces de l'autre desdites deux paires situées dans la position supérieure et la position inférieure.

13. Procédé selon la revendication 12, **caractérisé en ce qu'**il comprend l'opération de réalisation d'une bande ou d'un ruban de pain cuit au four (1) pourvu(e) de peaux de cuisson (2) sur deux faces opposées et également l'opération de subdivision de ladite bande ou dudit ruban en une pluralité de dites bandes.

14. Procédé selon la revendication 12 ou la revendication 13, **caractérisé en ce que** ladite bande est soumise à une opération (22) de coupe transversale qui la subdivise en une pluralité de morceaux, chacun destiné à définir un produit respectif, et **en ce qu'**au moins l'une desdites masses de garniture est réalisée sous la forme de plaques (15) ayant une longueur correspondant à la longueur desdits morceaux, de manière que lesdites plaques ne soient pas altérées par ladite opération (22) de coupe transversale.

15. Procédé selon la revendication 14, **caractérisé en ce qu'**il comprend les opérations de réalisation desdites plaques (15) à partir d'une masse de meringue comme matière de départ.
